# EUROPEAN PATENT SPECIFICATION

(11) **EP 2 195 632 B1**
(45) Date of publication and mention of the grant of the patent: **27.02.2013**
(21) Application number: 08836901.2
(22) Date of filing: 09.10.2008
(51) Int. Cl.: G01N 3/04, G01N 3/18

(54) **SAMPLE HOLDER FOR A THERMO-MECHANICAL ANALYSER**
PROBENHALTER FÜR EIN THERMOMECHANISCHES ANALYSEGERÄT
PORTE-ÉCHANTILLON POUR DISPOSITIF D'ANALYSE THERMO-MÉCANIQUE

(30) Priority: 10.10.2007 GB 0719768
(43) Date of publication of application: 16.06.2010
(73) Proprietor: Lacerta Technology Limited, Nottingham Nottinghamshire NG1 1PB (GB)
(72) Inventor: VAN-DE-VELDE, Jeffery Glynn, Keyworth, Nottinghamshire NG12 5AW (GB); WORTLEY, Peter James, Keyworth, Nottinghamshire NG12 5AW (GB); DUNCAN, John Charles, Keyworth, Nottinghamshire NG12 5AW (GB); FISHER, John Stanley, Keyworth, Nottinghamshire NG12 5AW (GB); PETTITT, Keith Edward Ernest, Keyworth, Nottinghamshire NG12 5AW (GB)
(74) Representative: Thould, Lee Matthew
(86) International application number: PCT/EP2008/063556
(87) International publication number: WO 2009/047305

(56) References cited:
- EP-A- 1 158 290
- WO-A-97/25608
- GB-A- 2 332 949
- GB-A- 2 390 434
- US-A- 4 426 160
- US-A- 5 470 757
- US-A- 5 733 507
- US-A- 5 915 283
- US-A- 6 146 013
- US-A1- 2005 011 274
- US-B1- 6 978 657

## Description

### FIELD OF THE INVENTION

Embodiments of the present invention relate to a sample holder for a thermo-mechanical analyser, and in particular but not exclusively to a sample holder for a dynamic mechanical analyser.

### BACKGROUND TO THE INVENTION

There are numerous situations in which it can be desirable to characterise materials. For example, various scientific instruments are available for characterising polymeric materials. These include solid state NMR instruments which are complex and expensive high-end instruments and the differential scanning calorimeter (DSC) which is a relatively basic and low expense instrument. As might be expected, the solid state NMR instrument gives very detailed information, whereas the DSC instrument gives limited thermal property information, for example the glass transition and the melting point. As a compromise between these instruments, a Fourier Transform Infra-red (FTIR) spectrometer probably provides the fastest and most cost-effective of conventional scientific instruments for polymer analysis. It does have drawbacks, in that some skill is required with data interpretation and small differences between polyolefins (one of the most commonly used family of plastics) can be hard to detect.

A broad class of instrumentation exists under the heading thermo-mechanical analyser. This includes the dynamic mechanical analyser (DMA - also known as dynamic mechanical thermal analyser or dynamic thermo mechanical analyser), the thermo-mechanical analyser (TMA), heat defection apparatus (HDT), creep and stress-relaxation instruments, which are all devices that can be used to characterise polymeric materials, and how their properties vary as a function of temperature.

Thermo-mechanical analysers as referred to in this specification include any measurement device, including a dynamic mechanical analyser, that applies a load, either static, dynamic, or some combination thereof, to a sample which is subjected to a temperature that remains constant with respect to time or changes with time and the subsequent deformation that results from either the effect of load or temperature is indicated and recorded as the temperature response of that sample. The use of thermo-mechanical analysers as defined herein is not exclusively limited to polymeric materials.

US 4426160 and GB2390434 show examples of priort art thermo-mechanical analysers.

In order to carry out effective analysis using a thermo-mechanical analyser, it is desirable to be able to provide repeatability with respect to the preparation of samples for analysis and good heat transfer to and from a sample. It would, therefore, be desirable to provide an improved sample holder for use with a thermo-mechanical analyser.

### BRIEF DESCRIPTION OF THE INVENTION

According to a first aspect of the present invention, there is provided a sample holder for a thermo-mechanical analyser as defined in claim 1.

The holding member may be generally planar.

The porous region may be adapted for impregnation by a flowable material. Such flowable materials may include meltable materials, such as polymeric materials, liquids and resinous materials.

The porous region may be provided across a generally central area of the holding member.

The holding member includes a non-porous region which may be contiguous with the porous region and which surround, the porous region.

The porous region may be generally circular and the holding member includes a non-porous centre region. The non-porous centre region may be provided substantially at the centre of the generally circular porous region.

The holding member may include a plurality of perforations which may define the porous region. The holding member may include a first layer of perforations and may include an adjacent second layer of perforations. The perforations in the first layer may be laterally offset from the perforations in the adjacent second layer. The perforations in the first layer may extend through approximately 50% of the thickness of the holding member and the perforations in the second layer may extend through approximately 50% of the thickness of the holding member.

The sample holder may comprise two of said holding members. The first of said two holding members may be locatable over the second of said two holding members such that the porous region of the first holding member substantially overlies the porous region of the second holding member.

In embodiments where the sample holder includes one of said holding members, the sample holder may further include a former member which may be locatable over the holding member and which may include an aperture therein to expose the porous region of the holding member. The former member may be generally planar.

The aperture may define a shallow recess in which at least part of the sample of material to be analysed may be defined, in use. The sample of material to be analysed may thus be defined by material in the recess and in the porous region, the material in these regions being integral.

The former member may be arranged for location over the holding member and the aperture in the former member may overlie the selected area of the holding member across which the porous region is provided.

The holding member and the former member may be integrally formed and may be movable from an open configuration to a closed configuration in which a contact surface of the holding member may be parallel to, and in contact with, a contact surface of the former member. The holding member and the former member may be substantially co-planar when in the open configuration. The holding member and the former member may be movable from the open configuration to the closed configuration by folding about a predetermined fold line.

The former member may include one or more overflow channels, which may be defined in the contact surface, for receiving excess material from the recess. The or each overflow channel may extend outwardly from the aperture in the former member.

Alternatively or additionally, the or each holding member may include one or more overflow channels, which may be defined in the contact surface, for receiving excess material. The or each overflow channel may extend outwardly from the selected area of the or each holding member across which the porous region is provided.

According to a seconde aspect of the present invention, there is provided a method for preparing a sample of material for analysis in a thermo-mechanical analyser as defined in claim 15.

Where the material to be analysed is a meltable material, the method may comprise melting the meltable material so that the meltable material impregnates the porous region. The method may thereafter comprise cooling the melted material so that it solidifies to form a sample of material to be analysed in the porous region.

The method may comprise urging the melted material into the porous region prior to cooling the melted material.

As indicated above, the meltable material may be a polymeric material.

The method may include placing a generally planar former member including an aperture in contact with the holding member and locating a specimen of the material to be analysed in a shallow recess defined by said aperture prior to the step of impregnating the material into the porous region.

The method may include placing the former member in contact with the holding member so that the aperture overlies the porous region, thereby exposing the porous region.

A region of material to be analysed may be formed in the shallow recess. Said region of material may be integral with the material in the porous region.

The holding member and the former member may be integrally formed and the step of placing the former member in contact with the holding member may include folding the former member and the holding member about a predetermined fold line.

The former member may include one or more overflow channels which may be arranged to receive excess material, and excess material may flow from the shallow recess along the or each overflow channel during the step of impregnating the material into the porous region.

The, or each, holding member may include one or more overflow channels which may be arranged to receive excess material, and excess material may flow from the porous region along the, or each, overflow channel during the step of impregnating material into the porous region.

The sample holder may include two of said holding members, and the method may comprise locating the first of said holding members over the second of said holding members so that the porous region of the first holding member substantially overlies the porous region of the second holding member.

According to a third aspect of the present invention, there is provided a thermo-mechanical analyser as defined in claim 14.

### BRIEF DESCRIPTION OF THE DRAWINGS

Embodiments of the present invention will now be described by way of example only and with reference to the accompanying drawings, in which:
Fig. 1 is a diagrammatic cross-sectional view of a first embodiment of a sample holder;
Fig. 2 is a diagrammatic plan view of a second embodiment of a sample holder in a first configuration;
Fig. 3 is a diagrammatic cross-sectional view of the sample holder of Fig. 2 in a second configuration;
Fig. 4 is a diagrammatic perspective view of part of the sample holder of Figs. 2 and 3 in the second configuration;
Fig. 5 is a diagrammatic plan view of a third embodiment of a sample holder in a first configuration;
Fig. 6 is a diagrammatic cross-sectional view of the sample holder of Fig. 5 in a second configuration;
Fig. 7 is a diagrammatic perspective view of part of the sample holder of Figs. 5 and 6 in the second configuration;
Fig. 8A is a diagrammatic perspective view of the top surface of a sample holder according to a fourth embodiment of the present invention;
Fig. 8B is a diagrammatic perspective view of the bottom surface of the sample holder illustrated in Fig. 8A;
Fig. 9A is a diagrammatic perspective view of the top surface of a sample holder according to a fifth embodiment of the present invention;
Fig. 9B is a diagrammatic perspective view of the bottom surface of the sample holder illustrated in Fig. 9A;
Fig. 10A is a diagrammatic perspective view of an inner surface of a sample holder according to a sixth embodiment of the present invention;
Fig. 10B is a diagrammatic perspective view of an outer surface of the sample holder illustrated in Fig. 10A;
Fig. 11A is a diagrammatic perspective view of a sample holder according to a seventh embodiment of the present invention;
Fig. 11B is a diagrammatic cross sectional perspective view of the sample holder illustrated in Fig. 11 A;
Fig. 12A is a diagrammatic perspective view of a sample holder according to an eighth embodiment of the present invention; and
Fig. 12B is a diagrammatic cross sectional perspective view of the sample holder illustrated in Fig. 12A.

### DETAILED DESCRIPTION OF EMBODIMENTS OF THE INVENTION

As indicated above, thermo-mechanical analysis, as referred to in this specification, is a measurement technique in which a load, either static, dynamic, or some combination thereof, is applied to a sample which is subjected to a temperature that remains constant with respect to time or that is varied with time, and in which the subsequent deformation that results from either the effect of load or temperature is indicated and recorded as the temperature response of that sample.

One non-limiting example of the thermo-mechanical analysis technique is dynamic mechanical analysis (DMA), also known as dynamic mechanical thermal analysis (DMTA) or dynamic thermo mechanical analysis. This is a technique that can be used to identify/characterise polymeric materials by measuring the stiffness and damping properties of such materials.

Stiffness depends on the mechanical properties of the material and its dimensions. It is frequently converted to a modulus to enable sample inter-material comparisons. Damping is expressed in terms of tan δ and is related to the amount of energy a material can store. DMA is the most sensitive technique for monitoring relaxation events, such as glass transitions, as the mechanical properties change dramatically when relaxation behaviour is observed.

The operation of a dynamic mechanical analyser is relatively simple to understand. A force (stress) is applied to a sample of material to be analysed using a motor. The stress is transmitted through a drive shaft from the motor to the sample which is conventionally mounted in a clamping mechanism. As the sample deforms, the amount of displacement is measured by a linear variable displacement transducer (LVDT) positional sensor. The strain can be calculated from the displacement. The force (or stress) is applied sinusoidally with a defined frequency.

As indicated above, dynamic mechanical analysers (DMAs) are often referred to as Dynamic Mechanical Thermal Analysers (DMTAs) as during measurement, the temperature of the sample is defined and can be changed.

The magnitude of the applied stress and the resultant strain are used to calculate the stiffness of the material under stress. The phase lag between the two (δ) is used to determine tan δ, the damping factor.

The principles of the DMA technique have been embodied by the Applicant in a novel plastics analyser which, due to the DMA principles on which it is based, also provides a highly sensitive technique for monitoring relaxation events. This novel plastics analyser is encompassed by the broad definition of thermo-mechanical analysers given above, and the sample holder according to embodiments of the invention is thus suitable for use with the Applicant's novel plastics analyser.

Embodiments of the present invention are thus concerned with an improved sample holder for a thermo-mechanical analyser (as defined herein) which operates in the manner described above. The figures illustrate generally various embodiments of such a sample holder 10, 110, 210, 310, 410, 510, 610, 710 for a thermo-mechanical analyser (not shown). The sample holder 10, 110, 210, 310, 410, 510 comprises a holding member 12, 112, 212, 312, 412, 512 including a porous region 14, 114, 214, 314, 414, 514 adapted for impregnation by a sample of material to be analysed, in use, in the thermo-mechanical analyser, the porous region 14, 114, 214, 314, 414, 514 being provided across a selected area of the holding member 12, 112, 212, 312, 412,512.

The following description is limited in certain parts to the specific example of analysing polymeric material. However, it is to be understood that the material to be impregnated into the porous region 14, 114, 214, 314, 414, 514 may be any flowable material, such as meltable materials other than polymeric material, liquids and resinous materials.

It should be appreciated that the dimensions of the sample holders 10, 110, 210, 310, 410, 510, 610, 710 illustrated in the accompanying drawings are greatly exaggerated for clarity purposes. The typical dimensions for such sample holders may be in the order of length 2.5cm, width 2cm and thickness 0.5mm, although it will of course be appreciated that variation of these dimensions is possible and may be necessary in accordance with the particular thermo-mechanical analyser in which the sample holder is to be located.

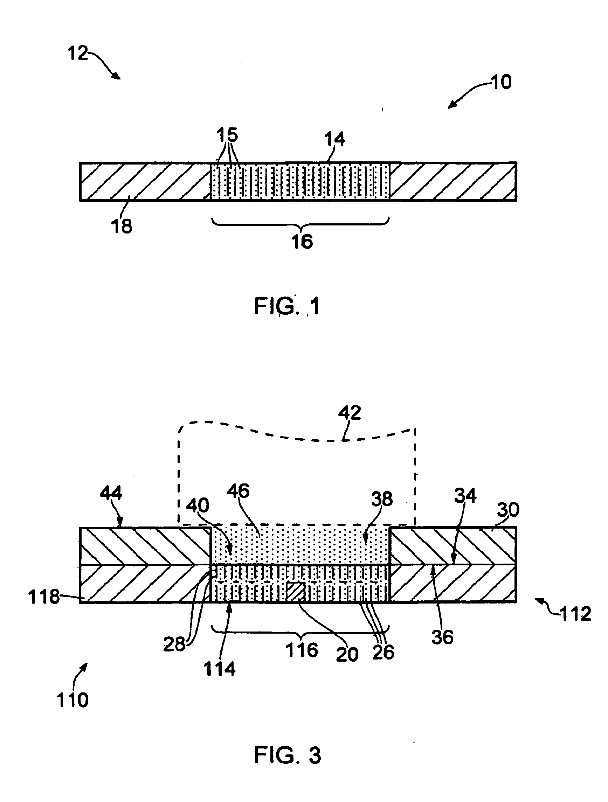

In more detail, Fig. 1 illustrates a first embodiment of a sample holder 10 comprising a generally planar holding member 12. The holding member 12 is typically formed of an inert material, such as annealed stainless steel, although it will be appreciated that other suitable materials may be employed.

The holding member 12 includes a porous region 14 which is provided across a selected area 16, and in particular a central area, of the holding member 12. The porous region 14 is adapted for impregnation by material, such as a polymeric material, to be subjected to analysis using a thermo-mechanical analyser. It should be appreciated that the porous region 14 may be integral with the holding member 12 and be made from same piece of material (i.e. they may be continuous with one another and may not have a joining interface).

The porous region 14 comprises a plurality of perforations, illustrated diagrammatically by the reference numeral 15, in the holding member 12, and these may be created by etching, machining, or by any other suitable technique, across the selected area 16 of the holding member 12.

The holding member 12 also includes a non-porous, solid, region 18 in which there are no perforations in the holding member 12. The non-porous, solid, region 18 is contiguous with, and surrounds, the porous region 14. The non-porous, solid, region 18 acts as a support when the sample holder is secured, typically by clamping, in a sample preparation station (which may form part of a thermo-mechanical analyser or be provided as a separate device) or in a sample analysis station of a thermo-mechanical analyser, and provides a surface that can be readily clamped to secure the sample holder 10 firmly in position. This is particularly important during analysis of a sample of polymeric material using a thermo-mechanical analyser, to prevent or minimise unwanted movement of the sample. Furthermore, secure location of the sample holder 10 in a sample analysis station is needed to ensure that correct force and displacement information are measured.

The non-porous, solid, region 18 also provides for very effective transfer of heat to and from the material sample in the porous region 14, which may be useful during sample preparation to rapidly melt the material and/or during testing so that the temperature of the sample of material can be rapidly increased or decreased, without introducing significant temperature lag errors into the analysis.

Where the material to be analysed is a polymeric material, a sample may be prepared using the sample holder 10 by locating a specimen of the polymeric material, for example one or more granules weighing in the order of between 20 and 40 mg, onto the porous region 14. The specimen may then be heated to melt it and then urged into the porous region 14, for example using a plunger, possibly spring-mounted, which applies a predetermined force to the melted polymeric material. Upon cooling of the polymeric material, it solidifies in the porous region 14 to form a sample for analysis in a thermo-mechanical analyser, such as a DMA for example.

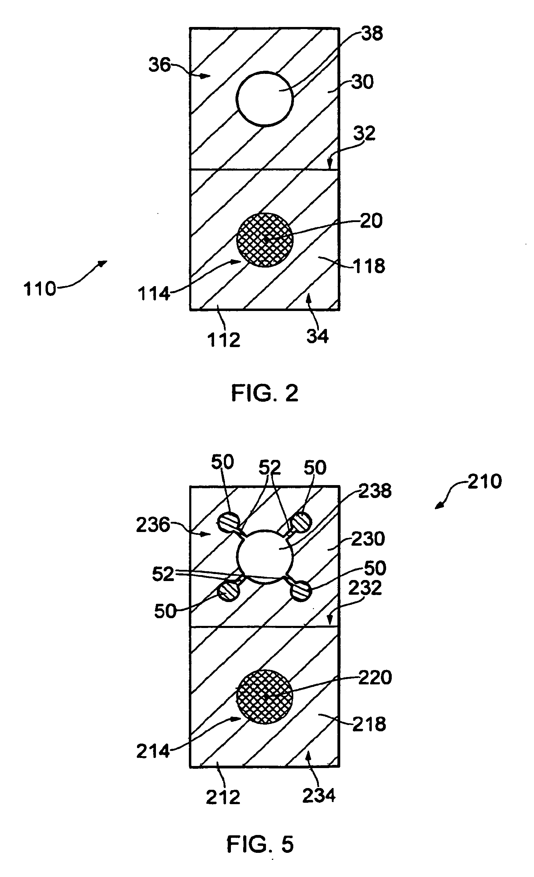

Referring now to Figs. 2 to 4, there is shown a second embodiment of a sample holder 110. The sample holder 110 shares some features in common with the sample holder 10, and corresponding features are therefore designated with corresponding reference numerals, prefixed by the number '1'.

In addition to the porous region 114 and the surrounding non-porous, solid, region 118, the holding member 112 of the sample holder 110 further includes a solid, non-porous, centre region 20 in which the holding member 112 is not perforated. This non-porous centre region 20 provides a solid contact point against which a loading member and/or a temperature sensing device (such as a thermocouple) may abut the holding member 112 during sample analysis in a thermo-mechanical analyser.

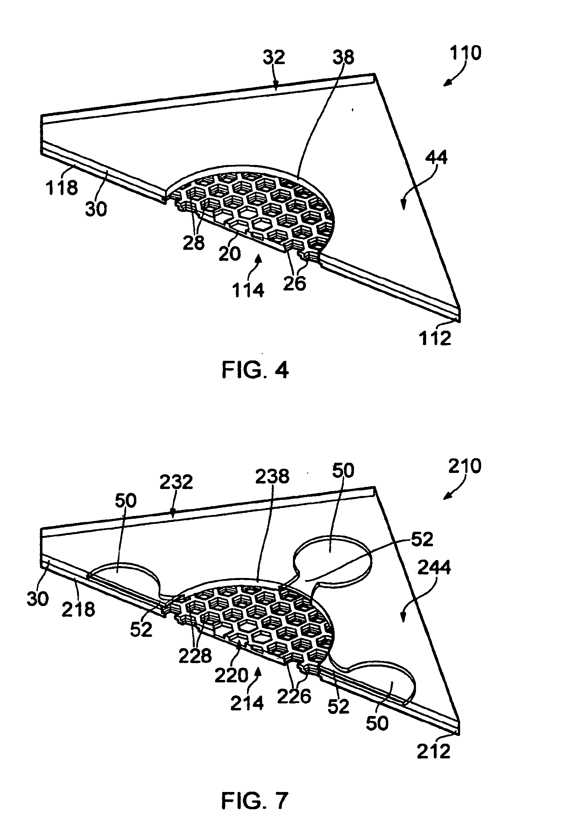

The holding member 112 comprises a first layer of perforations 26 and an adjacent second layer of perforations 28, the first and second layers of perforations 26, 28 together defining the porous region 114. As can be seen most clearly in Fig. 4, the first and second adjacent layers of perforations 26, 28 are laterally offset from each other. This lateral offset is a particularly advantageous feature since it ensures that when a material, such as a solidified polymeric material, is impregnated into the porous region 114, it is tightly locked in position and cannot easily break out. This is important given that the sample of material will be subjected to stress during its analysis.

As is clear from Fig. 4, the first layer of perforations 26 extend through about 50% of the thickness of the holding member 112 and the second layer of perforations 28 also extend through about the remaining 50% of the thickness of the holding member 112.

In the embodiment of Figs. 2 to 4, the non-porous centre region 20 is defined by the absence of perforations 26 in the centre region of the first layer of perforations 26 only. It will, however, be appreciated that the non-porous centre region 20 could alternatively or additionally be defined by the absence of perforations 28 in the second layer of perforations 28. It will also be noted that the perforations 26, 28 of the first and second adjacent layers are hexagonal. Again, it should be appreciated that the perforations 26, 28 may be any suitable shape.

The sample holder 110 further includes a generally planar former member 30 which is locatable over the holding member 112. The former member 30 is formed integrally with the holding member 112 from the same sheet material and the sample holder 110 includes a predetermined fold line 32 to enable the holding member 112 and former member 30 to be folded over onto each other. The holding member 112 and the former member 30 have an initial co-planar configuration at the time of manufacture, as shown in Fig. 2, thus enabling them to be formed integrally from the same sheet material. When it is desired to use the sample holder 110 to prepare a sample of material for analysis, the holding member 112 and the former member 30 are moved relative to each other, about the fold line 32, to a position in which a contact surface 34 of the holding member 112 is parallel to and in contact with an adjacent contact surface 36 of the former member 30. The predetermined fold line 32 may be provided by scoring or etching the surface of the holding member 112, or by otherwise deforming the surface of the holding member 112 in a suitable manner.

The former member 30 includes an aperture 38 in a generally central region thereof. The aperture 38 is positioned in the former member 30 so that when the holding member 112 and the former member 30 are folded together about the fold line 32, the aperture 38 is located substantially over the porous region 114 in the adjacent holding member 112. The porous region 114 is thus exposed through the aperture 38 and the aperture defines a shallow recess 40 in which a specimen of material, for example one or more granules of polymeric material weighing in the order of between 20 and 40 mg, is locatable for impregnation into the porous region 114.

Where the specimen of material is a meltable material, such as polymeric material, the specimen is heated in use to melt it and is then urged into the porous region 114 by a plunger 42 (illustrated in broken lines in Fig. 3), possibly spring-mounted, which applies a predetermined force to the melted material. The sample holder 112 is arranged, and in particular its dimensions are selected, so that the plunger 42 contacts an outer surface 44 of the former member 30 without entering into the shallow recess 40. A solid planar region 46 of material, which is substantially circular and thus disc shaped by virtue of the shape of the aperture 38, is thus formed in the shallow recess 40. Upon cooling of the melted material to form the sample, it will be readily understood that the solidified material in the porous region 114 is thus integral with the solidified region 46 of material in the shallow recess 40. A larger sample of material is thus obtained which facilitates subsequent analysis in a thermo-mechanical analyser. In particular, the extra layer of material that is provided by the region 46 in the shallow recess 40 significantly increases the stiffness of the material sample, relative to a sample that would be obtained without the use of the former member 30 and therefore with impregnation of the porous region 114 only, as described above with reference to Fig. 1. Sufficient sample stiffness is important since it has an effect on the signal that can be measured in a thermo-mechanical analyser, and especially in a DMA, during sample analysis.

For the avoidance of doubt, certain features of the sample holder 110 may be incorporated into the sample holder 10 described above with reference to Fig. 1. For example, the holding member 12 of the sample holder 10 includes a solid, non-porous, centre region 20 in which the holding member 12 is not perforated. The structure of the holding member 12 may be the same as the structure of the holding member 112, in particular with regard to the offsetting of adjacent layers of perforations.

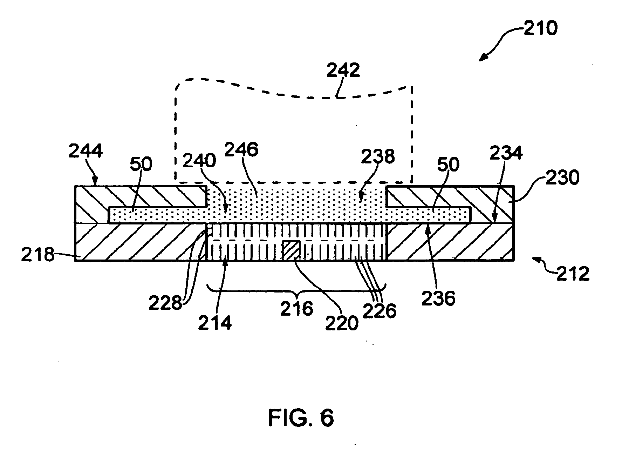

Referring now to Figs. 5 to 7, there is shown a third embodiment of a sample holder 210. The sample holder 210 shares some features in common with the sample holder 10 of Fig. 1 and many features in common with the sample holder 110 described with reference to Figs. 2 to 4, and corresponding features are therefore designated with corresponding reference numerals, prefixed by the number '2'.

In the sample holder 210, the former member 230 includes a plurality of overflow channels 50 extending from the aperture 238. The overflow channels 50 are defined by the removal of material from the contact surface 236 of the former member 230, partially through the thickness of the former member 230. Thus, when the holding member 212 and former member 230 are folded together, with their respective contact surfaces 234, 236 parallel to, and in contact with, each other, the overflow channels 50 are defined between the holding member 212 and the former member 230 and have openings 52 in communication with the shallow recess 240 defined by the aperture 238.

In alternative embodiments, the overflow channels 50 may be defined in the contact surface 234 of the holding member 212, or possibly in both the contact surface 234 of the holding member 212 and the contact surface 236 of the former member 230, at corresponding positions.

In use, a sample of meltable material, such as polymeric material, is prepared using the sample holder 210 in the same manner that has been described above with respect to the sample holder 110. However, in the event that the specimen of material, for example one or more granules of polymeric material as aforesaid, located on the porous region 214 is more than is required to fully impregnate the porous region 214 and form the solid region 246, excess polymeric material may flow through one or more of the openings 52 and along one or more of the overflow channels 50. The provision of the overflow channels 50 thus contributes to the repeatability of samples, formed within the porous region 214 and the shallow recess 40, that can be prepared using identically manufactured sample holders 210.

During sample analysis in a thermo-mechanical analyser, the sample holder 210 is securely fixed in position such that any excess material in the overflow channels 50 is outside the sample envelope. Any such excess material thus has no effect on sample characteristics, such as stiffness. If the overflow channels 50 were not present, the excess material could extend above the shallow recess 240 or could flow out of the shallow recess onto the outer surface 244 of the former member 230, and in both of these cases would lie within the sample envelope and potentially influence sample characteristics.

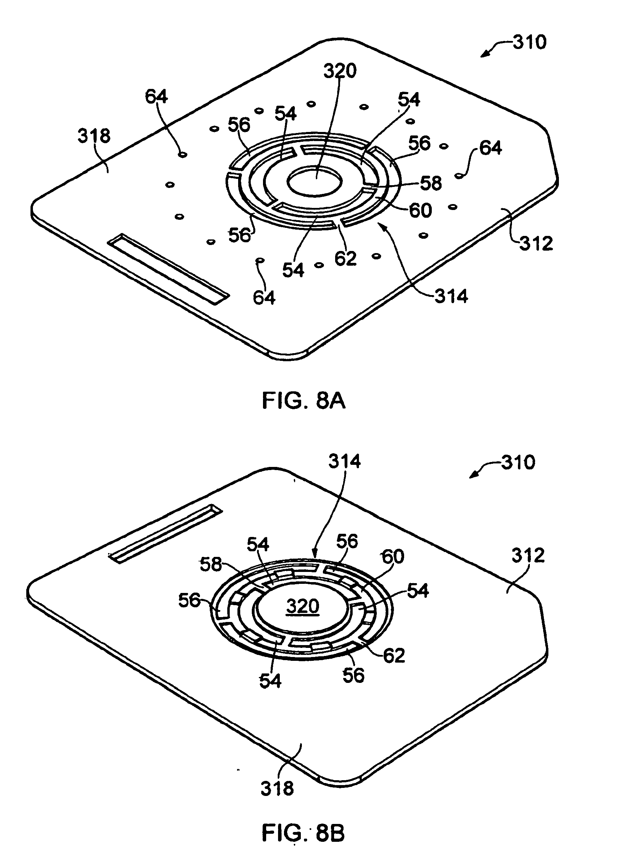

Referring now to Figs. 8A and 8B, there is shown a fourth embodiment of a sample holder 310. The sample holder 310 shares some features in common with the sample holders 10, 110, 210 illustrated in Figs. 1 to 7, and corresponding features are therefore designated with corresponding reference numerals, prefixed by the number '3'.

The sample holder 310 includes a circular non-porous centre region 320 and a porous region 314 which includes an inner ring of three perforations 54 and an outer ring of three perforations 56. The inner ring of perforations 54 and the outer ring of perforations 56 extend around the non-porous centre region 320. Each of the inner perforations 54 are defined by the circular non-porous centre region 320, three solid regions 58 which extend radially from the circular non-porous centre region 320 and a circular solid region 60 which separates the inner ring and the outer ring of perforations. Each of the outer perforations 56 are defined by the circular solid region 60, three solid regions 62 which extend radially from the circular solid region 60, and the non-porous, solid, region 318. In other embodiments of the invention there may be any number of the inner perforations 54 and the outer perforations 56.

It should be appreciated that the sensitivity of the sample holder 310 may be varied by varying the thickness of the regions 58, 60, 62. For example, if a sensitive sample holder is desired, the thickness of the regions 58, 60, 62 may be reduced. Similarly, if a less sensitive sample holder is desired, the thickness of the regions 58, 60, 62 may be increased.

The non-porous, solid, region 318 includes a plurality of blind apertures 64 arranged in a ring around the porous region 314. The blind apertures 64 provide a guide for a user when loading the sample holder 310 into a thermo-mechanical analyser since they are arranged to indicate where the clamp of the thermo-mechanical analyser should be secured. Consequently, the blind apertures 64 define an area within which a sample should not extend, otherwise the sample will lie outside of the clamp and thus outside the test area. It should be appreciated that other forms of guide may be provided which do not include blind apertures (e.g. the guide may be a continuous line or broken line) and may have a different shape (e.g. square or rectangular).

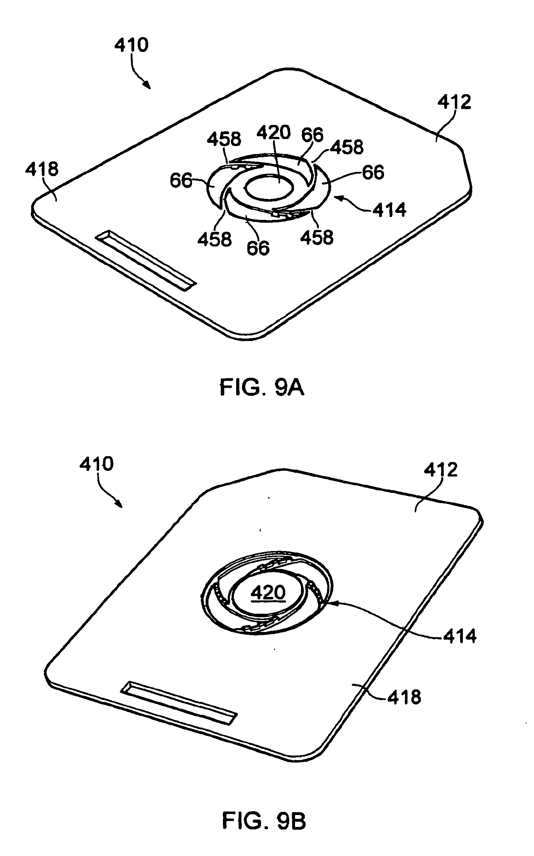

Referring now to Figs. 9A and 9B, there is shown a fifth embodiment of a sample holder 410. The sample holder 410 shares some features in common with the sample holders 10, 110, 210, 310 illustrated in Figs. 1 to 8B, and corresponding features are therefore designated with corresponding reference numerals, prefixed by the number '4'.

The sample holder 410 includes a holding member 412 comprising a porous region 414 that has four crescent shaped perforations 66 that extend around the perimeter of the circular non-porous centre region 320 and are separated from one another by solid regions 458. It will be appreciated from Figs. 9A & 9B, that the crescent shaped perforations 66 are arranged to form a spiral pattern since each of the crescent shaped perforations 66 are arranged so that the leading edge of each perforation overlaps and is positioned within the trailing edge of an adjacent perforation (i.e. the leading edge of a perforation is closer to the circular non-porous centre region 320 than a trailing edge of an adjacent perforation). In other embodiments of the invention there may be any number of crescent shaped perforations 66.

As mentioned above for the sample holder 310 illustrated in Figs. 8A & 8B, the sensitivity of the sample holder 410 may be varied by varying the thickness of the solid regions 458.

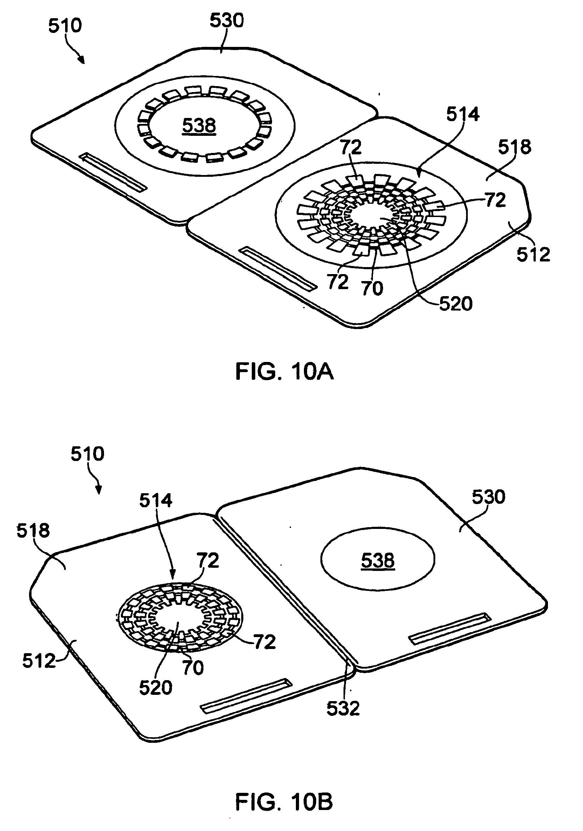

Referring now to Figs. 10A and 10B, there is shown a sixth embodiment of a sample holder 510. The sample holder 510 shares some features in common with the sample holders 10, 110, 210, 310, 410 illustrated in Figs. 1 to 9B, and corresponding features are therefore designated with corresponding reference numerals, prefixed by the number '5'.

The sample holder 510 includes a holding member 512 having a porous region 514 and a former member 530 having an aperture 538. The porous region 514 includes six concentric rings of perforations 70 that each extend around the circular non-porous central region 520. The perforations 70 of adjacent rings are positioned so that they are offset relative to one another and are separated by solid regions 72. In other embodiments of the invention there may be any number of rings of perforations 70.

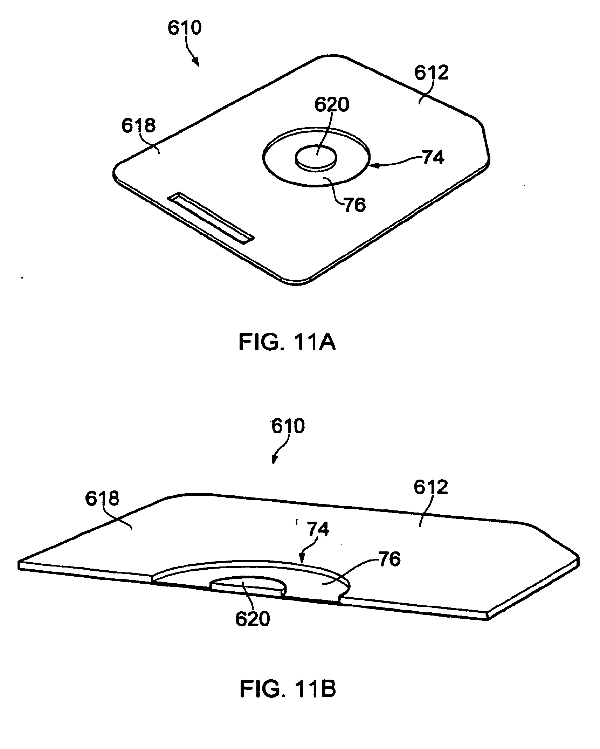

Referring now to Figs. 11A and 11B, there is shown a seventh embodiment of a sample holder 610. The sample holder 610 shares some features in common with the sample holders 10, 110, 210, 310, 410, 510 illustrated in Figs. 1 to 10B, and corresponding features are therefore designated with corresponding reference numerals, prefixed by the number'6'.

The sample holder 610 includes a holding member 12 having a region 74 that is adapted for impregnation by a sample of material to be analysed by a thermo-mechanical analyser. The region 74 is provided across a generally central area of the holding member 612 and includes a non-porous centre region 620. The region 74 comprises a circular blind aperture 76 and the non-porous centre region 620 comprises a circular protrusion that extends from the centre of the blind aperture 76.

The region 74 provides an advantage in that when it is impregnated by a sample of material, the sample of material is substantially prevented from contaminating a thermo-mechanical analyser since it cannot pass through the blind aperture 76. This may result in the thermo-mechanical analyser requiring less cleaning by a user.

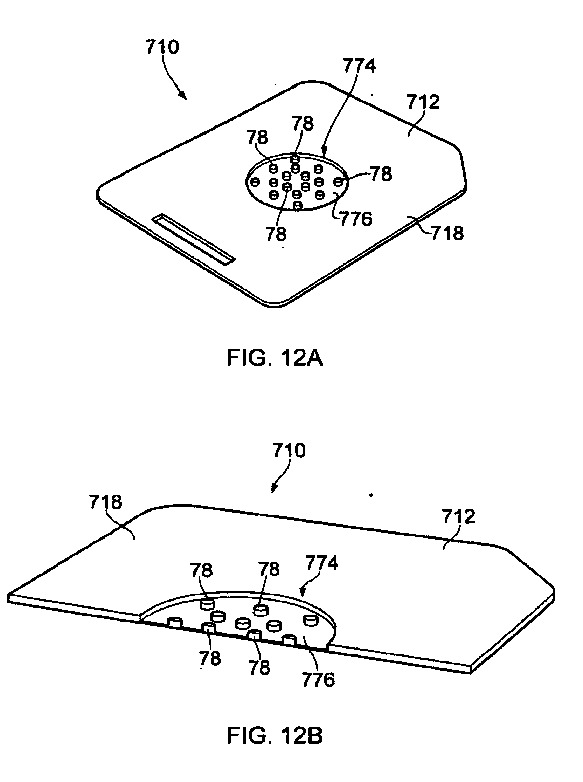

Referring now to Figs. 12A and 12B, there is shown an eighth embodiment of a sample holder 710. The sample holder 710 shares some features in common with the sample holders 10, 110, 210, 310, 410, 510, 610 illustrated in Figs. 1 to 11B, and corresponding features are therefore designated with corresponding reference numerals, prefixed by the number '7'.

The sample holder 710 includes a holding member 712 having a region 774 that comprises a blind aperture 776. The region 774 includes a plurality of protrusions 78 that extend from the blind aperture 78. As mentioned above with reference to Figs. 11A & 11B, the region 774 provides an advantage in that it may substantially reduce the contamination of a thermo-mechanical analyser. Additionally, the plurality of protrusions 78 may aid the impregnation of the sample of material to be tested in the sample holder 710.

Following preparation of a sample of material as aforesaid, using the sample holder 10, 110, 210, 310, 410, 510, 610, 710 the sample holder is loaded into an analysis station of a thermo-mechanical analyser, such as a dynamic mechanical analyser, where it is analysed using appropriate techniques, as outlined earlier in this specification. Although it will be appreciated by persons skilled in the art, for the avoidance of doubt the sample holder 10, 110, 210, 310, 410, 510, 610, 710 is a single use item, and a fresh sample holder 10, 110, 210, 310, 410, 510, 610, 710 must be used for preparation of each sample of material to be analysed. This is why repeatability of sample preparation is of such significance and why the sample holder 10, 110, 210, 310, 410, 510, 610, 710 according to embodiments of the present invention provides significant advantages over the prior art.

There is thus provided a sample holder 10, 110, 210 which enables repeatable samples to be prepared. The sample holder 10, 110, 210, 310, 410, 510, 610, 710 according to embodiments of the invention also provides a convenient means for easily testing a small quantity of material in a thermo-mechanical analyser, which is not normally possible. It facilitates the melting of a single granule of material, such as polymeric material, into the sample holder 10,110, 210, 310, 410, 510, 610, 710 and produces a convenient test specimen. Additionally, the intimate contact between the material to be analysed and the structure, typically metallic, forming the porous region 14, 114, 214, 314, 414, 514 (and the region 74, 774) allows high heating and cooling rates to be achieved, without introducing significant temperature lag errors. In particular, this intimate contact significantly enhances heat transfer to and from the sample of material in the porous region 14, 114, 214, 314, 414, 514 (and the region 74, 774). The solid region 18, 118, 218, 318, 418, 518, 618, 718 of the holding member 12, 112, 212, 312, 412, 512, 612, 712 also enables the sample holder 10, 110, 210, 310, 410, 510, 610, 710 to be securely fixed in position in a thermo-mechanical analyser during sample testing which, as indicated above, ensures that correct force and displacement information can be measured.

Although embodiments of the present invention have been described in the preceding paragraphs with reference to various examples, it should be appreciated that modifications to the examples given can be made without departing from the scope of the invention, as claimed. For example, the porous region 14, 114, 214, 314, 414, 514 may comprise a mesh structure instead of a plurality of perforations. As indicated above, the perforations defining the porous region 14, 114, 214, 314, 414, 514 may be of any suitable shape, density, size or configuration. For example, the perforations 26, 126, 28, 128 defining the porous region 14, 114, 214 may be larger in cross-section, for example in diameter where they are circular, towards the periphery of the selected area 116, 216 than towards the centre of the selected area 116, 216, or indeed vice-versa. The porous region 14, 114, 214, 314, 414, 514 may comprise blind apertures instead of perforations. This may help to prevent the thermo-mechanical analyser from becoming contaminated with a test sample.

The sample holder 10 of Fig. 1 may include a further holding member 12, which may be the same as the holding member 12 described with reference to Fig. 1 and which may be locatable over the holding member 12 such that the porous region 14 of the further holding member 12 overlies the porous region 14 of the first mentioned holding member 12.

In a similar fashion, the former member 30 of the sample holder 110 may be omitted and replaced with a further holding member. The further holding member may be the same as the holding member 112 described with reference to Figs. 2 to 4 or may be the same as the holding member 212 described with reference to Figs. 5 to 7. In either case, the further holding member 112, 212 may be locatable over the holding member 112 such that the porous region 114, 214 of the further holding member 112, 212 overlies the porous region 114 of the first mentioned holding member 112.

Similarly, the former member 230 of the sample holder 210 may be omitted and replaced with a further holding member. The further holding member may be the same as the holding member 112 described with reference to Figs. 2 to 4 or may be the same as the holding member 212 described with reference to Figs. 5 to 7. In either case, the further holding member 112, 212 may be locatable over the holding member 212 such that the porous region 114, 214 of the further holding member 112, 212 overlies the porous region 214 of the first mentioned holding member 212.

The aperture 38, 238, 538 in the former member 30, 230, 530 may be of any suitable shape, and is not limited to being circular.

Whilst the holding member 12, 112, 212, 312, 412, 512, 612, 712 and the former member 30, 230, 530 described above are generally planar, it should be appreciated that non-planar configurations are within the scope of the invention. For example, the holding member 12, 112, 212, 312, 412, 512, 612, 712 may have a slightly domed configuration.

As indicated above, the porous region 14, 114, 214, 314, 414, 514 (and the region 74, 774) of the sample holder 10, 110, 210, 310, 410, 510, 610, 710 may be impregnated with any suitable material, and is not limited to impregnation by polymeric materials. Such materials may include foodstuffs, liquids, thermosetting adhesives, liquid resin systems. Generally, the porous region 14, 114, 214, 314, 414, 514 (and the region 74, 774) may be impregnated with any material which is flowable at either ambient or elevated temperatures.

## Claims

1. A sample holder (10) for a thermo-mechanical analyser, the sample holder comprising: at least one holding member (12) including a porous region (14) adapted for impregnation by a sample of material to be analysed, the porous region (14) being provided across a selected area of the or each holding member (12); and wherein the holding member (12) includes: a non-porous region (18), integral with the porous region (14) and surrounding the porous region (14); and **characterised by** a non-porous centre region (20).

2. A sample holder according to claim 1, wherein the porous region (14) is generally circular.

3. A sample holder according to claim 1 or 2, wherein the holding member (12) includes a plurality of perforations (15) defining the porous region (14).

4. A sample holder according to claim 3, wherein the holding member (12) includes a first layer of perforations (26) and an adjacent second layer of perforations (28), and wherein the perforations in the first layer are laterally offset from the perforations in the adjacent second layer.

5. A sample holder according to any of the preceding claims, wherein the sample holder comprises two of said holding members (12), the first of said holding members being locatable over the second of said holding members so that the porous region of the first holding member substantially overlies the porous region of the second holding member.

6. A sample holder according to any of claims 1 to 4, wherein the sample holder comprises one of said holding members (12) and a former member (30) locatable over the holding member (12), the former member (30) including an aperture (38) therein to expose the porous region (14) of the holding member (12).

7. A sample holder according to claim 6, wherein the former member (30) is arranged for location over the holding member (12) so that the aperture (38) overlies the selected area of the holding member (12) across which the porous region (14) is provided,

8. A sample holder according to claim 7, wherein the former member (30) is generally planar, and wherein the at least one holding member (12) is generally planar and wherein the holding member (12) and the former member (30) are integrally formed and movable from an open configuration to a closed configuration in which a contact surface of the holding member (12) is parallel to and in contact with a contact surface of the former member (30).

9. A sample holder according to claim 8, wherein the holding member (12) and the former member (30) are substantially co-planar when in the open configuration.

10. A sample holder according to claim 9, wherein the holding member (12) and the former member (30) are movable from the open configuration to the closed configuration by folding about a predetermined fold line.

11. A sample holder according to any of claims 8 to 10, wherein the former member (30) includes one or more overflow channels (50) defined in the contact surface for receiving excess material from the recess, the or each overflow channel (50) extending outwardly from the aperture in the former member.

12. A sample holder according to any of the preceding claims, wherein the at least one holding member (12) includes one or more overflow channels (50) defined in a contact surface thereof for receiving excess material from the porous region, the or each overflow channel (50) extending outwardly from the selected area of the holding member across which the porous region is provided.

13. A sample holder according to any of the preceding claims, wherein the porous region (14) is adapted for impregnation by a sample of flowable material to be analysed.

14. A thermo-mechanical analyser comprising a sample holder (10) as claimed in any of the preceding claims.

15. A method for preparing a sample of material for analysis in a thermo-mechanical analyser using a sample holder (10) comprising at least one holding member (12), the method comprising impregnating a porous region (14), provided across a selected area of the at least one holding member (12), with material to be analysed, and wherein the holding member (12) includes: a non-porous region (18), integral with the porous region (14) and surrounding the porous region (14); and **characterised by** a non-porous centre region (20),

## Patentansprüche

1. Probenhalter (10) für einen thermomechanischen Analysator, wobei der Probenhalter aufweist: mindestens ein Halteglied (12) mit einem porösen Bereich (14), der zur Imprägnierung mittels einer Probe eines zu analysierenden Materials ausgelegt ist, wobei der poröse Bereich (14) über eine ausgewählte Fläche des oder jedes Halteglieds (12) hinweg vorgesehen ist; und wobei das Halteglied (12) aufweist: einen nicht-porösen Bereich (18), der mit dem porösen Bereich (14) einstückig ist und den porösen Bereich (14) umgibt; und **gekennzeichnet durch** einen nicht-porösen mittigen Bereich (20).

2. Probenhalter nach Anspruch 1, bei welchem der poröse Bereich (14) im wesentlichen kreisförmig ist.

3. Probenhalter nach Anspruch 1 oder 2, bei welchem das Halteglied (12) eine Vielzahl Perforationen (15) enthält, welche den porösen Bereich (14) definieren.

4. Probenhalter nach Anspruch 3, bei welchem das Halteglied (12) eine erste Schicht Perforationen (26) und eine benachbarte zweite Schicht Perforationen (28) enthält, wobei die Perforationen in der ersten Schicht von den Perforationen in der benachbarten zweiten Schicht seitlich versetzt sind.

5. Probenhalter nach einem der vorhergehenden Ansprüche, bei welchem der Probenhalter zwei der genannten Halteglieder (12) aufweist, wobei das erste der Halteglieder über dem zweiten der Halteglieder derart anordenbar ist, dass der poröse Bereich des ersten Halteglieds den porösen Bereich des zweiten Halteglieds im wesentlichen überlagert.

6. Probenhalter nach einem der Ansprüche 1 bis 4, bei welchem der Probenhalter eines der Halteglieder (12) und ein über dem Halteglied (12) anordenbares Formerglied (30) aufweist, wobei das Formerglied (30) eine Öffnung (38) enthält, um den porösen Bereich (14) des Halteglieds (12) zu exponieren.

7. Probenhalter nach Anspruch 6, bei welchem das Formerglied (30) zum derartigen Anordnen über dem Halteglied (12) eingerichtet ist, dass die Öffnung (38) die ausgewählte Fläche des Halteglieds (12), über welche hinweg der poröse Bereich (14) vorgesehen ist, überlagert.

8. Probenhalter nach Anspruch 7, bei welchem das Formerglied (30) im wesentlichen planar ist, wobei das mindestens eine Halteglied (12) im wesentlichen planar ist, und wobei das Halteglied (12) und das Formerglied (30) einstückig ausgebildet sind und von einer offenen Konfiguration zu einer geschlossenen Konfiguration bewegbar sind, in welcher eine Berührungsfläche des Halteglieds (12) parallel zu und in Berührung mit einer Berührungsfläche des Formerglieds (30) ist.

9. Probenhalter nach Anspruch 8, bei welchem das Halteglied (12) und das Formerglied (30) in ihrer offenen Konfiguration im wesentlichen koplanar sind.

10. Probenhalter nach Anspruch 9, bei welchem das Halteglied (12) und das Formerglied (30) durch Falten um eine vorbestimmte Faltlinie von der offenen Konfiguration zu der geschlossenen Konfiguration bewegbar ist.

11. Probenhalter nach einem der Ansprüche 8 bis 10, bei welchem das Formerglied (30) einen oder mehrere in der Berührungsfläche vorgesehene Überströmungskanäle zur Aufnahme überschüssigen Materials von der Vertiefung enthält, wobei der oder jeder Überströmungskanal (50) sich von der Öffnung in dem Formerglied nach außen erstreckt.

12. Probenhalter nach einem der vorhergehenden Ansprüche, bei welchem das mindestens eine Halteglied (12) einen oder mehrere in einer Berührungsfläche von ihm vorgesehene Überströmungskanäle (50) zur Aufnahme überschüssigen Materials von dem porösen Bereich enthält, wobei der oder jeder Überströmungskanal (50) sich von der ausgewählten Fläche des Halteglieds, über welche hinweg der poröse Bereich vorgesehen ist, nach außen erstreckt.

13. Probenhalter nach einem der vorhergehenden Ansprüche, bei welchem der poröse Bereich (14) zur Imprägnierung mittels eines zu analysierenden fließfähigen Materials ausgelegt ist.

14. Thermomechanischer Analysator, welcher einen Probenhalter gemäß einem der vorhergehenden Ansprüche aufweist.

15. Verfahren zum Vorbereiten einer Materialprobe zur Analyse in einem thermomechanischen Analysator unter Verwendung eines Probenhalters (10), welcher mindestens ein Halteglied (12) aufweist, wobei das Verfahren aufweist: Imprägnieren eines über eine ausgewählte Fläche des mindestens einen Halteglieds (12) hinweg vorgesehenen porösen Bereichs (14) mit zu analysierendem Material, und wobei das Halteglied (12) aufweist: einen nicht-porösen Bereich (18), der mit dem porösen Bereich (14) einstückig ist und den porösen Bereich (14) umgibt; und **gekennzeichnet durch** einen nicht-porösen mittigen Bereich (20).

## Revendications

1. Porte-échantillon (10) pour un analyseur thermomécanique, le porte-échantillon comprenant : au moins un élément de maintien (12) comprenant une région poreuse (14) adaptée pour imprégnation pour un échantillon de matière à analyser, la région poreuse (14) étant disposée à travers une zone choisie du ou de chaque élément de maintien (12) ; et dans lequel l'élément de maintien (12) comprend : une région non poreuse (18), solidaire de la région poreuse (14) et entourant la région poreuse (14) ; et **caractérisé par** une région centrale non poreuse (20).

2. Porte-échantillon selon la revendication 1, dans lequel la région poreuse (14) est généralement circulaire.

3. Porte-échantillon selon la revendication 1 ou 2, dans lequel l'élément de maintien (12) comprend une pluralité de perforations (15) définissant la région poreuse (14).

4. Porte-échantillon selon la revendication 3, dans lequel l'élément de maintien (12) comprend une première couche de perforations (26) et une seconde couche adjacente de perforations (28), et dans lequel les perforations de la première couche sont décalées latéralement par rapport aux perforations de la seconde couche adjacente.

5. Porte-échantillon selon l'une quelconque des revendications précédentes, dans lequel le porte-échantillon comprend deux desdits éléments de maintien (12), le premier desdits éléments de maintien pouvant être situé au-dessus du second desdits éléments de maintien de sorte que la région poreuse du premier élément de maintien recouvre sensiblement la région poreuse du second élément de maintien.

6. Porte-échantillon selon l'une quelconque des revendications 1 à 4, dans lequel le porte-échantillon comprend l'un desdits éléments de maintien (12) et un élément formeur (30) pouvant être situé au-dessus de l'élément de maintien (12), l'élément formeur (30) comprenant une ouverture (38) à l'intérieur afin d'exposer la région poreuse (14) de l'élément de maintien (12).

7. Porte-échantillon selon la revendication 6, dans lequel l'élément formeur (30) est agencé pour être situé au-dessus de l'élément de maintien (12) de sorte que l'ouverture (38) recouvre la zone choisie de l'élément de maintien (12) à travers laquelle la région poreuse (14) est disposée.

8. Porte-échantillon selon la revendication 7, dans lequel l'élément formeur (30) est généralement plan, et dans lequel le au moins un élément de maintien (12) est généralement plan et dans lequel l'élément de maintien (12) et l'élément formeur (30) sont formés solidairement et mobiles d'une configuration ouverte à une configuration fermée dans laquelle une surface de contact de l'élément de maintien (12) est parallèle à et en contact avec une surface de contact de l'élément formeur (30).

9. Porte-échantillon selon la revendication 8, dans lequel l'élément de maintien (12) et l'élément formeur (30) sont sensiblement coplanaires lorsqu'ils sont dans la configuration ouverte.

10. Porte-échantillon selon la revendication 9, dans lequel l'élément de maintien (12) et l'élément formeur (30) sont mobiles de la configuration ouverte à la configuration fermée en étant pliés autour d'une ligne de pli prédéterminée.

11. Porte-échantillon selon l'une quelconque des revendications 8 à 10, dans lequel l'élément formeur (30) comprend un ou plusieurs canaux de débordement (50) définis dans la surface de contact pour recevoir l'excédent de matière de l'évidement, le ou chaque canal de débordement (50) s'étendant vers l'extérieur depuis l'ouverture dans l'élément formeur.

12. Porte-échantillon selon l'une quelconque des revendications précédentes, dans lequel le au moins un élément de maintien (12) comprend un ou plusieurs canaux de débordement (50) définis dans sa surface de contact pour recevoir l'excédent de matière de la région poreuse, le ou chaque canal de débordement (50) s'étendant vers l'extérieur depuis la zone choisie de l'élément de maintien à travers laquelle la région poreuse est disposée.

13. Porte-échantillon selon l'une quelconque des revendications précédentes, dans lequel la région poreuse (14) est adaptée pour imprégnation par un échantillon de matière fluide à analyser.

14. Analyseur thermomécanique comprenant un porte-échantillon (10) tel que revendiqué dans l'une quelconque des revendications précédentes.

15. Procédé de préparation d'un échantillon de matière pour analyse dans un analyseur thermomécanique utilisant un porte-échantillon (10) comprenant au moins un élément de maintien (12), le procédé comprenant l'imprégnation d'une région poreuse (14), disposée à travers une région choisie du au moins un élément de maintien (12), de matière à analyser, et dans lequel l'élément de maintien (12) comprend : une région non poreuse (18), solidaire de la région poreuse (14) et entourant la région poreuse (14) ; et **caractérisé par** une région centrale non poreuse (20).
